# EUROPEAN PATENT SPECIFICATION

(11) **EP 0 390 989 B1**
(45) Date of publication and mention of the grant of the patent: **15.02.1995**
(21) Application number: 89303397.7
(22) Date of filing: 06.04.1989
(51) Int. Cl.: G09F 3/04, A01G 9/02

(54) **Horticultural containers**
Gartenkübel
Conteneurs horticoles

(43) Date of publication of application: 10.10.1990
(73) Proprietor: Tarbatt, John Everard, Tansley Matlock Derbyshire DE4 5FR (GB)
(72) Inventor: Tarbatt, John Everard, Tansley Matlock Derbyshire DE4 5FR (GB)
(74) Representative: Drever, Ronald Fergus

(56) References cited:
- WO-A-88/01593
- AU-B- 1 816 183
- BE-A- 737 334
- FR-A- 2 358 822
- US-A- 4 102 081
- US-A- 4 748 770

## Description

This invention is concerned with improvements in or relating to containers and particularly horticultural containers such as plant pots.

Whether house plants or garden plants, plants are generally sold in plant pots in a suitable growing medium. It is important for the purchaser to be able to identify a plant, and identification is normally by way of a flexible label attached to the plant itself or a rigid label supported by the growing medium itself. While the flexible label may be suitable for wooded plants which do not die back outside the growing season, they are not suitable for other types of plants. The rigid labels are too easily removed, accidentally or otherwise, and tend to be lost.

There has been disclosed, principally in WO-A-9005352 which constitutes a state of the art according to Art. 54(3)(4) EPC, but also in AU-B-10161/83, a plant container having an aperture arrangement to accept a label which does not have the problems referred to above. However, in each arrangement the location of such a label can be a problem when the container is filled with a growing medium, and the functional parts of the label mounting are susceptible to breakage and consequent dislodgement of the label, as well as being unsightly.

According to the present invention there is a plant containing arrangement comprising a container in the form of a plant pot having a peripheral upstanding wall or walls for retaining a growing medium for a plant, and having an open end, the upper end in use, and one or more apertures formed in the pot, the or each aperture having spaced upper and lower edges and being formed transversely through the upstanding wall or walls from externally to internally of the pot at such a location or locations towards the upper end of the pot whereby to be accessible from externally of the pot and from internally generally above the level of the growing medium, and an elongate label of a flexible material marked to identify a selected plant to be planted in the pot, the or each aperture being shaped to enable passage of the label therethrough from internally or externally of the pot, the label being thereafter suitably tied, whereby the label is releasably secured to the pot.

The respective aperture may be in the form of a slot extending substantially parallel to an upper edge of the container and spaced therefrom.

The aperture or apertures may also be formed to enable handling of the container utilising the or each aperture, by either or both of manual or mechanical handling.

The container is preferably formed of a plastics material The or each aperture may be formed in a rim of the plant pot, for example at opposed locations, and further drainage apertures may be provided at the lower end of the wall of the pot.

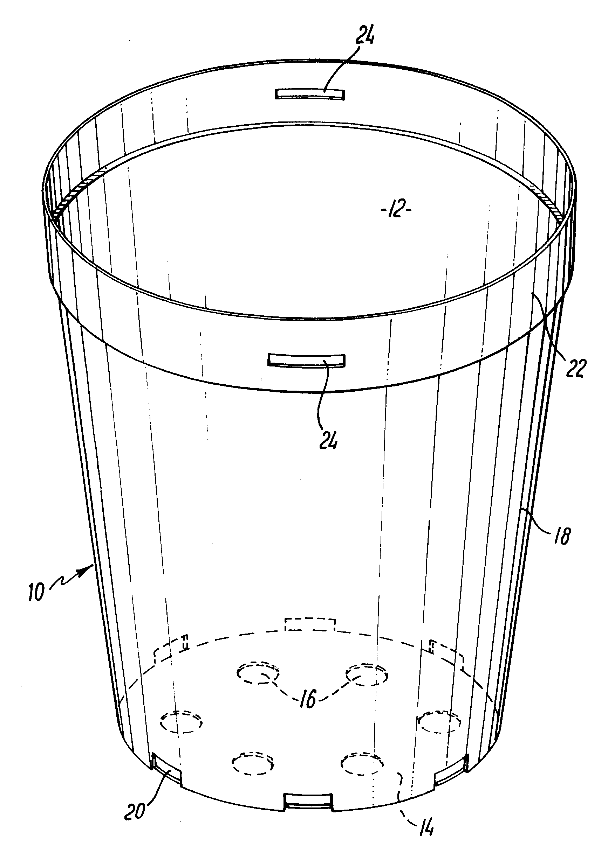

An embodiment of the present invention will now be described by way of example only with reference to the single figure of the accompanying drawing which is a perspective view of a plant pot according to the invention.

Referring to the drawing, a plant pot 10 formed, for example, of a moulded plastics material, has a substantially circular cross section which tapers from an open upper end 12 to a closed lower end 14. The latter is provided with a plurality of drainage apertures 16 and the peripheral wall 18 of the pot is provided with further drainage apertures 20 at the lower end thereof. At the upper end 12 the pot 10 is formed with a peripheral rim 22.

During manufacture the pot 10 is formed with a pair of through slots 24 in the rim 22, the slots 24 extending substantially parallel to the upper edge of the pot 10 and being spaced therefrom. The slots 24 are located diametrically opposite one another.

In use, an elongate flexible label (not shown), for example of plastics and having an aperture in one end, can locate through one of the slots 24 to extend to either side thereof and the other end of the label can then be passed through the opening in said one end and pulled tight to effectively tie the label onto the pot 10.

When a plant within a suitable growing medium is contained within the pot 10, it will be appreciated that a marked label identifying the plant in question can then be attached to the pot as described above. The fixing of the label is not therefore dependent on the type of plant in the pot and will not be displaced from the pot, as can easily happen with a rigid label in the growing medium.

The slots 24 can also function as surface drainage slots for the growing medium in the pot 10 and can further be utilised for handling of the pot 10. It will be appreciated however that the apertures 24 can be of any other suitable size or shape and can be formed in other than the rim 22. Also only one aperture 24 may be required or more than the two apertures 24 as shown can be formed in the pot 10. It will also be appreciated that the invention is not restricted to the type of plant pot described and shown and can be utilised for all sizes and shapes of containers of the horticultural type, in any suitable material, both rigid and non-rigid materials.

Additional apertures may be formed in the wall section between the rim 22 and the main part of the wall 18, the intermediate wall section being substantially horizontal in use.

Various other modifications may be made without departing from the invention.

## Claims

1. A plant containing arrangement comprising a container in the form of a plant pot (10) having a peripheral upstanding wall or walls (18) for retaining a growing medium for a plant, and having an open end, the upper end (12) in use, and one or more apertures (24) formed in the pot, the or each aperture (24) having spaced upper and lower edges and being formed transversely through the upstanding wall or walls (18) from externally to internally of the pot (10) at such a location or locations towards the upper end (12) of the pot (10) whereby to be accessible from externally of the pot (10) and from internally generally above the level of the growing medium, and an elongate label of a flexible material marked to identify a selected plant to be planted in the pot (10), the or each aperture (24) being shaped to enable passage of the label therethrough from internally or externally of the pot, the label being thereafter suitably tied, whereby the label is releasably secured to the pot (10).

2. An arrangement according to Claim 1, characterised in that the respective aperture (24) is in the form of a slot extending substantially parallel to an upper edge of the container (10) and spaced therefrom.

3. An arrangement according to Claim 1 or 2, characterised in that the or each aperture (24) is formed in a rim of the plant pot (10).

4. An arrangement according to Claim 3, characterised in that a pair of apertures (24) are provided at opposed locations.

5. A arrangement according to any of the preceding Claims, characterised in that the, or at least one of the apertures (24), is formed to enable handling of the container (10) utilising the or each aperture (24), by either or both of manual or mechanical handling.

6. An arrangement according to any of the preceding Claims, characterised in that drainage apertures (20) are provided at the lower end of the wall of the pot (10).

7. An arrangement according to any of the preceding Claims, characterised in that the container (10) is formed of a plastics material.

## Patentansprüche

1. Vorrichtung zur Aufnahme von Pflanzen, mit einem Behälter in Gestalt eines Pflanzentopfs (10), der eine am Umfang hochstehende Wand oder Wände (18) zum Zurückhalten eines Wachsmediums für eine Pflanze aufweist und ein offenes Ende, beim Gebrauch das obere Ende (12), sowie eine oder mehrere im Topf ausgebildete Öffnungen (24) besitzt, wobei die oder jede Öffnung (24) mit Abstand zueinander einen oberen und einen unteren Rand aufweist und quer durch die hochstehende Wand oder Wände (18) von außerhalb nach innerhalb des Topfes (10) an einer solchen Stelle oder Stellen ausgebildet ist, daß sie von außerhalb des Topfes (10) und von innerhalb im wesentlichen über dem Niveau des Wachsmediums her zugänglich ist, und mit einem länglichen Etikett aus flexiblem Material, das zum Identifizieren einer in dem Topf (10) zu pflanzenden ausgewählten Pflanze gekennzeichnet ist, wobei die oder jede Öffnung (24) so geformt ist, daß das Etikett von innerhalb oder außerhalb des Topfes hindurchgeführt werden kann, wonach das Etikett in geeigneter Weise festgemacht wird, so daß das Etikett lösbar mit dem Topf (10) verbunden ist.

2. Vorrichtung nach Anspruch 1, dadurch gekennzeichnet, daß die jeweilige Öffnung (24) die Gestalt eines Schlitzes aufweist, der sich im wesentlichen parallel zu einem oberen Rand des Behälters (10) und mit Abstand zu diesem erstreckt.

3. Vorrichtung nach Anspruch 1 oder 2, dadurch gekennzeichnet, daß die oder jede Öffnung (24) in einem Randbund des Pflanzentopfes (10) ausgebildet ist.

4. Vorrichtung nach Anspruch 3, dadurch gekennzeichnet, daß ein Paar von Öffnungen (24) an entgegengesetzten Stellen vorgesehen ist.

5. Vorrichtung nach jedem der vorstehenden Ansprüche, dadurch gekennzeichnet, daß die oder mindestens eine der Öffnungen (24) so ausgebildet ist, daß eine manuelle und/oder mechanische Handhabung des Behälters (10) unter Verwendung der oder jeder Öffnung (24) ermöglicht wird.

6. Vorrichtung nach jedem der vorstehenden Ansprüche, dadurch gekennzeichnet, daß Entwässerungsöffnungen (20) am unteren Ende der Wand des Topfes (10) vorgesehen sind.

7. Vorrichtung nach jedem der vorstehenden Ansprüche, dadurch gekennzeichnet, daß der Behälter (10) aus Kunststoffmaterial hergestellt ist.

## Revendications

1. Dispositif servant à contenir une plante, comprenant un récipient se présentant sous la forme d'un pot à plante (10) possédant une paroi ou des parois (18) périphérique(s) droite(s) destinée(s) à retenir un milieu de croissance pour une plante, et possédant une extrémité ouverte, l'extrémité supérieure (12) lors de l'utilisation, et une ou plusieurs ouvertures (24) formées dans le pot, l'ouverture ou chaque ouverture (24) possédant des rebords supérieur et inférieur espacés et étant ménagée(s) de façon transversale à travers la ou les paroi(s) droite(s), de l'extérieur vers l'intérieur du pot (10), à un emplacement ou des emplacements, en direction de l'extrémité supérieure (12) du pot (10), tel(s) qu'elle(s) soi(en)t accessible(s) à partir de l'extérieur du pot (10) et de l'intérieur généralement au-dessus du niveau du milieu de croissance, et une étiquette allongée en matériau flexible portant une inscription permettant d'identifier une plante destinée à être plantée dans le pot (10), l'ouverture ou chaque ouverture (24) ayant une forme permettant le passage de l'étiquette à travers elle à partir de l'intérieur ou de l'extérieur du pot, l'étiquette étant ensuite attachée de façon adaptée, ce qui fixe de façon amovible l'étiquette au pot (10).

2. Dispositif selon la revendication 1, caractérisé en ce que l'ouverture respective (24) se présente sous la forme d'une fente s'étendant de façon sensiblement parallèle à un bord supérieur du récipient (10) et à distance de celui-ci.

3. Dispositif selon la revendication 1 ou 2, caractérisé en ce que l'ouverture ou chaque ouverture (24) est formée dans un bord du pot à plante (10).

4. Dispositif selon la revendication 3, caractérisé en ce qu'une paire d'ouvertures (24) est prévue en des points opposés.

5. Dispositif selon l'une quelconque des revendications précédentes, caractérisé en ce que l'ouverture, ou au moins une des ouvertures (24), est formée de façon à permettre de manipuler le récipient (10) en utilisant l'ouverture ou chaque ouverture (24), par manipulation manuelle et/ou mécanique.

6. Dispositif selon l'une quelconque des revendications précédentes, caractérisé en ce que des ouvertures de drainage (20) sont ménagées à l'extrémité inférieure de la paroi du pot (10).

7. Dispositif selon l'une quelconque des revendications précédentes, caractérisé en ce que le récipient (10) est constitué en plastique.
